# EUROPEAN PATENT APPLICATION

(11) **EP 0 998 075 A2**
(43) Date of publication of application: **03.05.2000**
(21) Application number: 99120911.5
(22) Date of filing: 29.10.1999
(51) Int. Cl.: H04L 12/18

(54) **Terminal unit, computer server, communication method, and record medium**

(30) Priority: 29.10.1998 JP 30922998
(71) Applicant: Mitsubishi Materials Corporation, Chiyoda-ku, Tokyo 100-004 (JP)
(72) Inventor: Tari, Kazuyoshi, Omiya-shi, Saitama 330-0835 (JP); Unoki, Hiroyuki, Omiya-shi, Saitama 330-0835 (JP); Nagira, Tumoru, Omiya-shi, Saitama 330-0835 (JP)
(74) Representative: HOFFMANN - EITLE

(57) **Abstract**

A terminal unit and a computer server, capable of distributing/receiving only necessary information of broadcast information. The broadcast terminal unit (1) distributes identical information simultaneously to computers and terminals (4-1 to 4-4) connected to a network (5) specified. At this time, an identifier indicative of broadcast information and a broadcast network address are added to the information, while this information is divided correspondingly to levels according to candidates for broadcast and is distributed through a network (5) the network address indicates. A terminal unit (4-1 to 4-4) extracts only the necessary information from the received broadcast information in accordance with a broadcast level given to this terminal unit (4-1 to 4-4), and places it on a display.

## Description

### BACKGROUND OF THE INVENTION

### 1. Field of the Invention

The present invention relates to a terminal unit, a computer server, a communication method and a record medium storing a communication program, which are made to broadcast or multicast a message or the like to terminal units connected thereto through a network.

The broadcast or multicast signifies that the same information is distributed or sent simultaneously to all equipment connected to a network and, since the broadcast does not require designation of an address for each of equipment and transmission to each of the equipment, has been used in many cases including simultaneous distribution of important information.

### 2. Description of the Related Art

Meanwhile, although the information distribution by the broadcast enables information transmitted from one equipment to be sent simultaneously to a plurality of equipment, there is a case in which the terminals receiving the distribution do not need all the information distributed. For example, there is no need for the public to receive the information for polices or fire stations at the time of disasters.

On the other hand, the polices or the fire stations need to know information issued to the public. Thus, it is desirable that, of the information to be distributed, only the information the reception side needs is distributed or received.

There is a problem which arises with the information distribution by the conventional broadcast, however, in that, because of mere simultaneous distribution of the same information, difficulty is experienced in distributing only the information the reception side needs.

### SUMMARY OF THE INVENTION

Accordingly, the present invention has been developed in consideration of these situations, and it is an object of the invention to provide a terminal unit, a computer server, a communication method and a record medium which are capable of distributing or receiving only needed information of information being broadcasted.

For this purpose, in accordance with a first aspect of this invention, there is provided a broadcast terminal unit which distributes identical information simultaneously to a computer and a terminal connected to a network specified, the broadcast terminal unit adding an identifier indicative of broadcast information and a network address given for broadcast to the information, and dividing said information correspondingly to levels according to broadcast candidates or broadcast subjects, and further distributing the divided information through a network said network address indicates. Thus, in the broadcast terminal unit, the broadcast information is produced in a state divided or classified correspondingly to levels according to broadcast candidates and is distributed through a network, so that it is possible to broadcast the information divided correspondingly to levels.

In accordance with a second aspect of this invention, there is provided a terminal unit which displays broadcast information divided correspondingly to levels according to broadcast candidates and broadcasted through a network, the terminal unit comprising a broadcast information receiving section for receiving the broadcast information, a broadcast level definition section having, of the levels according to the broadcast candidates, a broadcast level pertaining to the terminal unit, and a broadcast information extracting section for extracting only information, the terminal unit needs, from the received broadcast information. Thus, of the broadcast information divided correspondingly to levels according to broadcast candidates, the display of only the necessary information becomes possible.

In this instance, the broadcast information receiving section establishes communication with a computer server by carrying out radio communication with a radio base station connected to the computer server. Accordingly, even a movable terminal can also receive the broadcast information.

Furthermore, in accordance with a third aspect of this invention, there is provided a computer server which is connected to a network to receive broadcast information divided correspondingly to levels according to broadcast candidates for distributing the broadcast information to a subordinate terminal unit, the computer server comprising a broadcast information receiving section for receiving the broadcast information, a broadcast level definition section having, of the levels according to the broadcast candidates, a broadcast level pertaining to the terminal unit connected to the computer server, and a broadcast information reconstructing section for reconstructing the received broadcast information according to the broadcast level, with the broadcast information reconstructed in the broadcast information reconstructing section being distributed or sent to the terminal unit. Thus, it is possible to distribute only the terminal requiring information on the basis of the broadcast level of the terminal connected to the computer server receiving the broadcast information.

In this instance, the computer server further comprises a radio base station for establishing radio communication with the terminal unit through the radio base station. Accordingly, even a movable terminal can also distribute the broadcast information.

Still furthermore, in accordance with a fourth aspect of this invention, there is provided a communication method of, in a terminal unit according to the aforesaid second aspect of this invention, displaying broadcast information divided correspondingly to levels according to broadcast candidates, the communication method comprising the steps of receiving broadcast information distributed, extracting only information, the terminal unit needs, from the received broadcast information by reference to the contents defined in the broadcast level definition section, and displaying only the extracted information from the broadcast information. Thus, of the broadcast information divided correspondingly to levels according to broadcast candidates, the display of only the necessary information becomes possible.

Yet furthermore, in accordance with a fifth aspect of this invention, there is provided a communication method of, in the computer server according to the aforesaid third aspect of this invention, distributing broadcast information divided correspondingly to levels according to broadcast candidates, the communication method comprising the steps of receiving the broadcast information broadcasted to a network to which the computer server is in connection, reconstructing the broadcast information by reference to the broadcast level definition section defining a level according to a broadcast candidate, and transmitting the reconstructed broadcast information to a terminal connected to the computer server. Thus, it is possible to distribute only the terminal requiring information on the basis of the broadcast level of the terminal connected to the computer server receiving the broadcast information.

Moreover, in accordance with a sixth aspect of this invention, there is provided a computer readable record medium retaining a broadcast information displaying program for, in the terminal unit according to the aforesaid second aspect of this invention, displaying broadcast information divided correspondingly to levels according to broadcast candidates, wherein the broadcast information displaying program makes a computer receive the distributed broadcast information, extract only information, the terminal unit needs, from the received broadcast information by reference to the contents defined in the broadcast level definition section, and display only the extracted information from the broadcast information. Thus, of the broadcast information divided correspondingly to levels according to broadcast candidates, the display of only the necessary information becomes possible.

Still moreover, in accordance with a seventh aspect of this invention, there is provided a computer readable record medium storing a broadcast information distributing program for, in the computer server according to the third aspect of this invention, distributing broadcast information divided correspondingly to levels according to broadcasting candidates, wherein the broadcast information distributing program makes a computer receive the broadcast information broadcasted through a network to which the computer server is connected, reconstruct the received broadcast information by reference to the broadcast level definition section defining a level according to a broadcast candidate, and transmit the reconstructed broadcast information to a terminal unit connected to the computer server. Thus, it is possible to distribute only the terminal requiring information on the basis of the broadcast level of the terminal connected to the computer server receiving the broadcast information.

### BRIEF DESCRIPTION OF THE DRAWINGS

The object and features of the present invention will become more readily apparent from the following detailed description of the preferred embodiments taken in conjunction with the accompanying drawings in which:
Fig. 1 is a block diagram showing the entire configuration of a communication system according to this invention;
Fig. 2 is a block diagram showing a configuration of a server according to a first embodiment of this invention;
Fig. 3 is a block diagram showing a configuration of mobile terminals according to a second embodiment of this invention;
Fig. 4 is a flow chart showing an operation of the server shown in Fig. 2;
Fig. 5 is a flow chart showing an operation of the mobile terminals shown in Fig. 3;
Fig. 6 is an explanatory illustration of a broadcast information format; and
Fig. 7 is an explanatory illustration of another broadcast information format.

### DETAILED DESCRIPTION OF THE INVENTION

Referring to the drawings, a description will be given hereinbelow of a terminal unit and a computer server according to a first embodiment of the present invention.

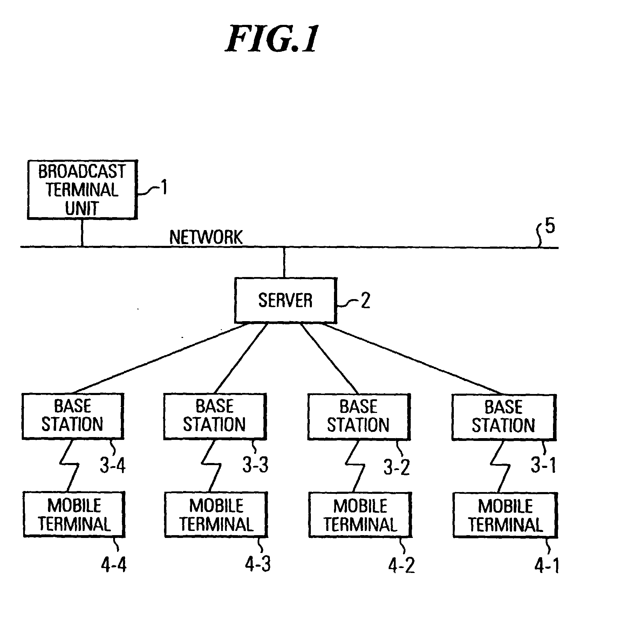

Fig. 1 is a block diagram showing the entire configuration of a communication system according to this invention. In this illustration, designated at reference numeral 1 is a broadcast terminal unit for producing and transmitting broadcast information, and denoted at reference numeral 2 is a computer server (which will be referred to hereinafter as a server) connected through a network 5 to the broadcast terminal unit 1. Additionally, reference numerals 3-1 to 3-4 depict radio base stations (each of which will be referred to as a base station) connected to the server 2, while reference numerals 4-1 to 4-4 represent mobile terminals connectable through radio communications to the base stations 3-1 to 3-4, respectively.

In the illustration, although four base stations 3-1 to 3-4 are in connection with the server 2, five or more base stations are connectable thereto.

In addition, the connection of one mobile terminal (4) to one base station (3) is illustrated, radio communications are also establishable between one base station (3) and two or more mobile terminals (4).

Secondly, referring to Fig. 1, a description will be given hereinbelow of an operation of broadcasting (or multicasting) broadcast information from the broadcast terminal unit 1.

First of all, the operator produces information to be broadcasted through the use of the broadcast terminal unit 1.

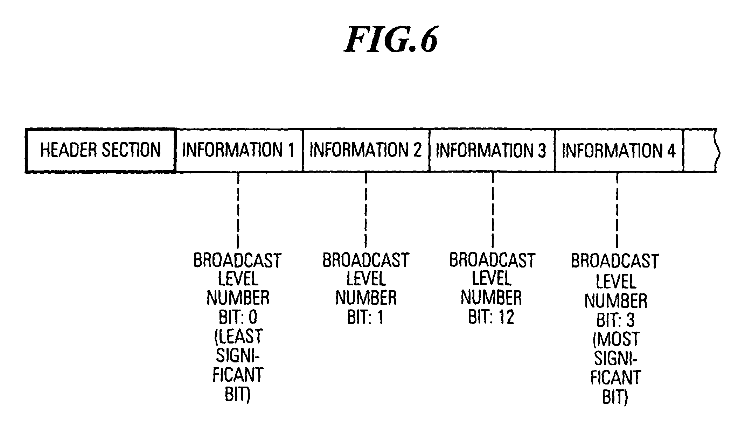

A format of the broadcast information to be produced in this case is as shown in Fig. 6. As illustrated in Fig. 6, the information to be broadcasted is composed of a header section and a plurality of information. In this instance, let it be assumed that there are information divided into or classified in four sections.

In the header section, defined are an identifier indicating that this information is broadcast information and an network address to which this broadcast information is broadcasted, and in the information 1 to 4 subsequent to the header section, defined are sizes thereof.

Furthermore, because few terminals of the broadcast receivers require all the information, the information following the header section is divided correspondingly to levels according to candidates for broadcast, or subjects of broadcast. In the example shown in Fig. 6, the information is divided into in four sections.

In this case, the division made correspondingly to level (which will sometimes be referred to hereinafter as level classification) signifies that, taking simultaneous multicast for instance, broadcast level numbers are given to a terminal (level 1) the individual possesses, a terminal (level 3) a self-governing body owns, a terminal (level 7) a fire station has and a terminal (level 15) a police retains, respectively.

In this way, the terminals made to receive the broadcast information are classified in terms of level to have levels (each of which will be referred to hereinafter as a broad level) pertaining thereto, with broadcast level numbers corresponding to the broadcast levels being given thereto, respectively.

Bits corresponding to these broadcast level numbers are allocated to the information 1 to 4 shown in Fig. 6, respectively, so that, if the bits for one information show "1", the terminal which needs this information is a terminal having the corresponding broadcast level number. In the example shown in Fig. 6, the least significant bit is allocated to the information 1, while the most significant bit is assigned to the information 4. In this case, the broadcast numbers are expressed by four bits.

For example, for the terminal which requires only the information 1, only the least significant bit indicates "1", and the broadcast level number becomes "1". Additionally, for the terminal which requires all the intonation 1 to 4, since all the bits take "1", the broadcast level number becomes "15". Still furthermore, in the case of the terminal which does not require the information at all, the broadcast level number becomes "0".

Thus, in the case in which four information exist, the level classification in 16 kinds from the broadcast level number "0" to the broadcast level number "15" is possible.

Incidentally, if a lot of information exist, the allocation of the broadcast numbers is also feasible by increasing the number of bits.

In this way, the broadcast information is produced in a state divided into a plurality of sections.

The broadcast terminal unit 1 broadcasts the produced broadcast information through a network specified.

The broadcast terminal unit 1 can be constructed with, for example, a computer unit equipped with an input/output device.

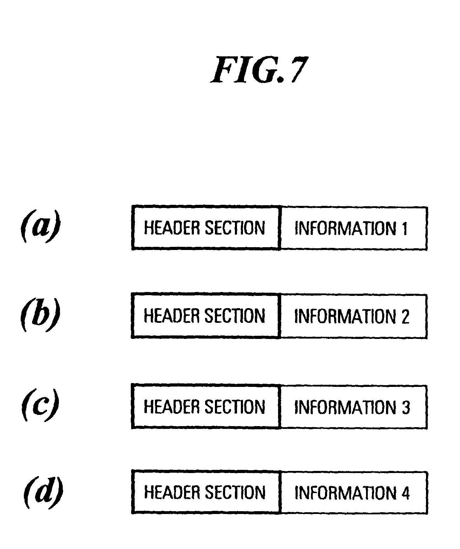

It is also appropriate that, as shown in Fig. 7, the broadcast information is divided into information 1 to 4 indicated by (a), (b), (c) and (d) and a header section is added to each of the information 1 to 4 so that the broadcast information is distributed in this state. In this case, an identifier is given to the header section to identify the contents of the following information.

Furthermore, a description will be given hereinbelow of an operation in which the server 2 distributes the broadcast information to the mobile terminals 4-1 to 4-4.

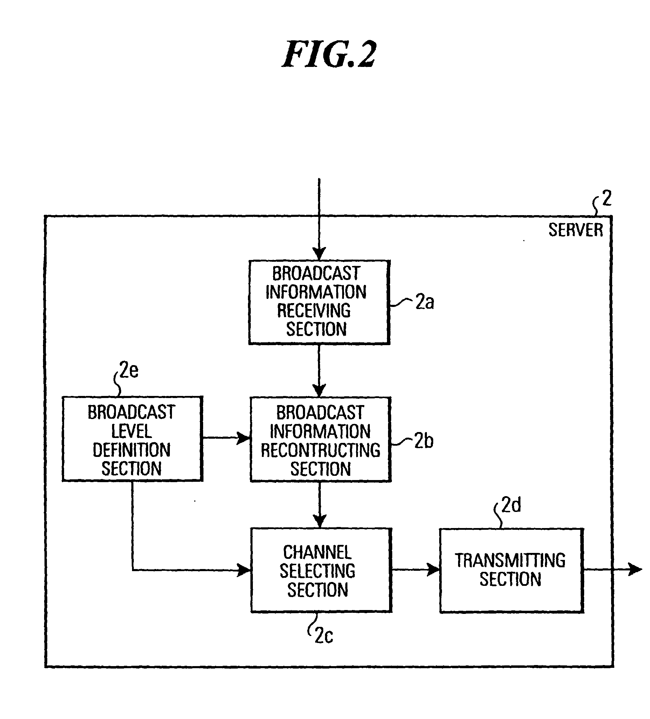

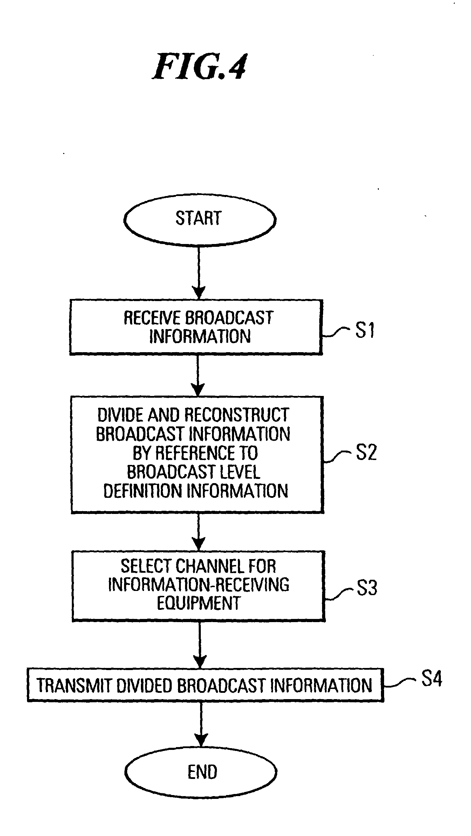

Fig. 2 is a block diagram showing a configuration of the server 2, and Fig. 4 is a flow chart showing an operation of the server 2.

First of all, in the server 2, a broadcast information receiving section 2a receives broadcast information distributed from the broadcast terminal unit 1 (step S1) and retains this broadcast information therein.

At this time, the broadcast information receiving section 2a decides, on the basis of whether or not an identifier indicative of the broadcast information is included in a header section of the distributed information, whether or not this information is the broadcast information.

Subsequently, a broadcast information reconstructing section 2b reads out the broadcast information from the broadcast information receiving section 2a and, concurrently, reconstructs the read broadcast information to meet the broadcast levels of the mobile terminals 4-1 to 4-4 connected thereto (step S2).

In this case, the reconstruction signifies that, of the all the received broadcast information, the information the mobile terminal (4) does not require is removed and the broadcast information is constructed using only the required information.

In a broadcast level definition section 2e, defined are the broadcast level numbers of the mobile terminals 4-1 to 4-4 connected at this point of time and communication channels.

Following this, a channel selecting section 2c selects a channel corresponding to each of the mobile terminals 4-1 to 4-4 by reference to the broadcast level definition section 2e (step S3) and hands over the reconstructed broadcast information to a transmitting section 2d.

The transmitting section 2d sets the channels selected in the channel selecting section 2c and transmits the broadcast information from the channel selecting section 2c to the mobile terminals 4-1 to 4-4 (step S4).

Incidentally, if a packet communication is set up between the server 2 and the mobile terminals 4-1 to 4-4, it is also appropriate that the channel selecting section 2c translates the information-receiving address into an address of each of the mobile terminals 4-1 to 4-4 and sends packets thereto.

Thus, the server 2, receiving the broadcast information produced in a state divided into a plurality of information, reconstructs this broadcast information in accordance with the broadcast level of the mobile terminal (4) connected thereto, and transmits only the necessary information to the mobile terminal (4); therefore, the mobile terminal (4) can receive only the information it needs.

Moreover, a second embodiment of this invention will be described hereinbelow with reference to Figs. 1, 3 and 5.

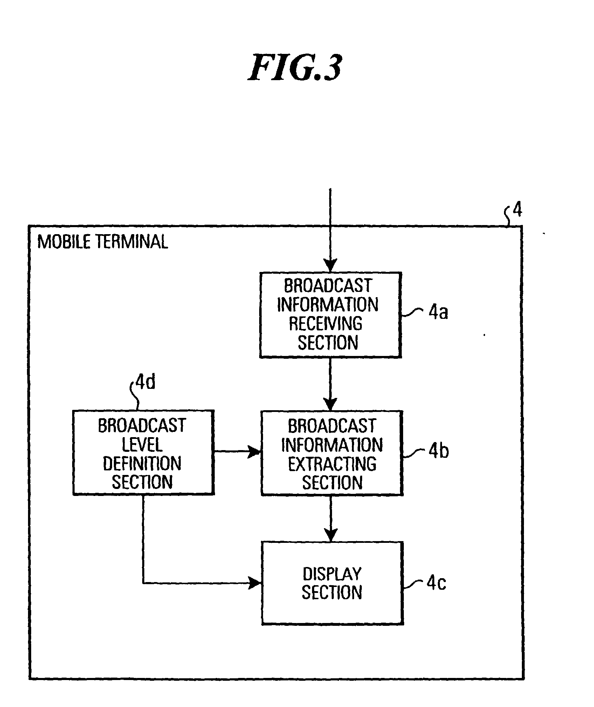

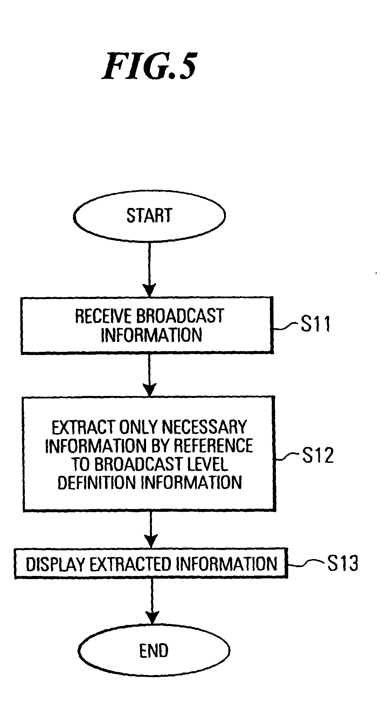

Fig. 3 is a block diagram showing a configuration of a mobile terminal 4 according to a second embodiment of this invention, and Fig. 5 is a flow chart showing an operation of the mobile terminal 4 shown in Fig. 3.

Referring to Figs. 3 and 5, a description will be given hereinbelow of an operation of the mobile terminal 4.

First of all, as mentioned above, the broadcast terminal unit 1 produces broadcast information and broadcasts it through a network 5. Subsequently, the server 2 receives this broadcast information and directly distributes it to the mobile terminals 4-1 to 4-4.

In the following description, the operations of the mobile terminals 4-1 to 4-4 are the same, and the operation of the mobile terminal 4-1 will be exemplified.

On the distribution of the broadcast information from the server 2, a broadcast information receiving section 4a receives this broadcast information (step S11) and retains it therein.

At this time, the broadcast information receiving section 4a decides, on the basis of whether or not an identifier representative of the broadcast information is contained in a header section of the information distributed, whether or not this information is the broadcast information.

Following this, a broadcast information extracting section 4b reads out the broadcast information retained in the broadcast information receiving section 4a and, concurrently, extracts only the information necessary for this mobile terminal 4-1 by reference to a broadcast level definition section 4d (step S12).

At this time, the broadcast level definition section 4d has a broadcast level of this mobile terminal 4-1, and on the basis of the broadcast level number, the broadcast information extracting section 4b reads out only the corresponding information from the broadcast information shown in Fig. 6.

Then, the broadcast information extracting section 4b displays the extracted broadcast information on a display section 4c (step S13).

Hence, only the information necessary for this mobile terminal 4-1 appears on the display section 4c provided in the mobile terminal 4-1.

In this way, only the necessary information is extracted from the received broadcast information and displayed so that the information unnecessary for the mobile terminal (4) is removable.

In addition, since the decision on whether it is necessary or not is made by the level classification defined in the respective mobile terminals (4), on the terminal side broadcasting information, it is possible to select the broadcast information received by changing the method of dividing the broadcasting information to the mobile terminal (4).

Although the above description has been made in the case in which the communication is established according to the radio communicating technique, this invention covers a system in which the connection between a terminal and the server 2 is made through a wire communication. Additionally, the terminal configuration shown in Fig. 3 is also applicable to a terminal unit employing a wire communication.

Furthermore, a terminal unit having the configuration shown in Fig. 3 can also be connected directly to the network 5.

Still furthermore, in addition to the text data, the broadcast information can also be audio data or a signal having a specific meaning. In this case, the display section 4c shown in Fig. 3 may be replaced with, for example, a speaker which generates a speech or an alarm device which issues an alarm sound in response to reception of a signal.

Yet furthermore, it is also appropriate that a program for realizing the steps shown in Figs. 4 and 5 is recorded in a record medium a computer can ready so-called computer readable record medium, so that a computer system reads out the program recorded therein and implements the program to conduct the level classification processing of the broadcast information. In this case, the computer system includes an OS and hardware such as peripheral devices. Additionally, the computer readable record medium covers portable mediums including a floppy disk, a magneto optical disk, a ROM and a CD-ROM, and a storage unit such as a hard disk to be built in computer systems.

In addition, the computer readable record medium includes a device which retains a program dynamically for a short time, such as a communication line for transmitting a program through a network such as the Internet or a telecommunication line such as a telephone line and a device which retains a program for a constant time, such as a volatile memory placed in the interior of a computer system constituting a server or a client. Still additionally, it is also acceptable that the aforesaid program realizes a portion of the above-described functions, or that the above-described functions are realized by a combination with a program already stored in the computer system.

That is, in a computer readable record medium storing a broadcast information display program for conducting display processing of the broadcast information, the broadcast information display program makes a computer realize a function of receiving the broadcast information distributed, a function of extracting only the information the terminal unit requires, from the received broadcast information by reference to the contents defined in the broadcast level definition section, and a function of displaying only the extracted information from the broadcast information.

Moreover, in a computer readable record medium storing a broadcast information distributing program for conducting distribution processing of the broadcast information, the broadcast information distributing program makes a computer realize a function of receiving the broadcast information sent through a network connected to a computer server, a function of reconstructing the received broadcast information by reference to the broadcast level definition section having the definition of level classification, and a function of transmitting the reconstructed broadcast information.

It should be understood that the foregoing relates to only preferred embodiments of the present invention, and that it is intended to cover all changes and modifications of the embodiments of the invention herein used for the purpose of the disclosure, which do not constitute departures from the spirit and scope of the invention.

## Claims

1. A broadcast terminal unit which distributes identical information simultaneously to a computer and a terminal (4-1 to 4-4) connected to a network (5) specified, characterised in that said broadcast terminal unit adds an identifier indicative of broadcast information and a network address given for broadcast to said information, and divides said information correspondingly to levels according to broadcast candidates, and distributes the divided information through said network (5) said network address indicates.

2. A terminal unit which displays broadcast information divided correspondingly to levels according to broadcast candidates and broadcasted through a network (5), characterised by comprising:
a broadcast information receiving section (4a) for receiving said broadcast information;
a broadcast level definition section (4d) having, of said levels according to said broadcast candidates, a broadcast level pertaining to said terminal unit; and
a broadcast information extracting section (4b) for extracting only information, said terminal unit needs, from the received broadcast information.

3. A terminal unit according to claim 2, characterised in that said broadcast information receiving section (4a) establishes communication with a computer server (2) by carrying out radio communication with a radio base station (3-1 to 3-4) connected to said computer server (2).

4. A computer server which is connected to a network (5) to receive broadcast information divided correspondingly to levels according to broadcast candidates for distributing said broadcast information to a subordinate terminal unit (4-1 to 4-4), characterised by comprising:
a broadcast information receiving section (2a) for receiving said broadcast information;
a broadcast level definition section (2e) having, of said levels according to said broadcast candidates, a broadcast level pertaining to said terminal unit (4-1 to 4-4) connected to said computer server; and
a broadcast information reconstructing section (2b) for reconstructing the received broadcast information according to said broadcast level, with said broadcast information reconstructed in said broadcast information reconstructing section (2b) being distributed to said terminal unit (4-1 to 4-4).

5. A computer server according to claim 4, characterised by further comprising a radio base station (3-1 to 3-4) for establishing radio communication with said terminal unit (4-1 to 4-4) through said radio base station (3-1 to 3-4).

6. A communication method of, in a terminal unit (4-1 to 4-4) according to claim 2 or 4, displaying broadcast information divided correspondingly to levels according to broadcast candidates, characterised by comprising the steps of:
receiving broadcast information distributed;
extracting only information, said terminal unit (4-1 to 4-4) needs, from the received broadcast information by reference to the contents defined in a broadcast level definition section (4d); and
displaying only the extracted information from said broadcast information.

7. A communication method of, in a computer server (2) according to claim 4 or 5, distributing broadcast information divided correspondingly to levels according to broadcast candidates, characterised by comprising the steps of:
receiving said broadcast information broadcasted to a network (5) to which said computer server (2) is in connection;
reconstructing said broadcast information by reference to a broadcast level definition section (2e) defining a level according to a broadcast candidate; and
transmitting the reconstructed broadcast information to a terminal (4-1 to 4-4) connected to said computer server (2).

8. A computer readable record medium retaining a broadcast information displaying program for, in a terminal unit (4-1 to 4-4) according to claim 2 or 3, displaying broadcast information divided correspondingly to levels according to broadcast candidates, characterised in said broadcast information display program makes a computer receive the distributed broadcast information, extract only information, said terminal unit (4-1 to 4-4) needs, from the received broadcast information by reference to the contents defined in a broadcast level definition section (4d), and display only the extracted information from said broadcast information.

9. A computer readable record medium storing a broadcast information distributing program for, in a computer server (2) according to claim 4 or 5, distributing broadcast information divided correspondingly to levels according to broadcasting candidates, characterised in that said broadcast information distributing program makes a computer receive said broadcast information broadcasted through a network (5) to which said computer server (2) is connected, reconstruct the received broadcast information by reference to a broadcast level definition section defining a level according to a broadcast candidate, and transmit the reconstructed broadcast information to a terminal unit (4-1 to 4-4) connected to said computer server (2).
